## Europäisches Patentamt
## European Patent Office
## Office européen des brevets

(19)

(11) Numéro de publication: **0 040 113 B1**

(12) **FASCICULE DE BREVET EUROPEEN**

(45) Date de publication du fascicule du brevet:
22.08.84

(51) Int. Cl.³: **G 01 V 1/18**

(21) Numéro de dépôt: 81400586.4

(22) Date de dépôt: 13.04.81

(54) **Sismomètre.**

(30) Priorité: **15.04.80 FR 8008409**

(43) Date de publication de la demande:
**18.11.81 Bulletin 81/46**

(45) Mention de la délivrance du brevet:
**22.08.84 Bulletin 84/34**

(84) Etats contractants désignés:
**BE CH DE GB IT LI SE**

(56) Documents cités:
**EP - A - 0 014 656
DE - A - 2 303 104
DE - B - 1 053 796
DE - C - 707 257
US - A - 2 745 085**

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**

(72) Inventeur: **Claque, Ghislain, 19, rue de l'Orée du Bois,
Morigny-Champigny F-91150 Etampes (FR)**
Inventeur: **Meesters, André, 18, rue d'Estienne d'Orves,
F-91370 Verrieres-Le-Buisson (FR)**

(74) Mandataire: **Mongrédien, André et al, c/o
BREVATOME 25, rue de Ponthieu, F-75008 Paris (FR)**

ACTORUM AG

## Description

La présente invention concerne un sismomètre.

On sait que les sismomètres mesurent les ébranlements du sol provoqués par des causes naturelles telles que les tremblements de terre, ou artificielles, telles que les explosions. Un sismomètre moderne se compose d'un capteur de déplacements du sol, qui utilise le plus souvent l'inertie d'un pendule, d'un transducteur qui transforme en une force électromotrice le déplacement ou la vitesse du déplacement du pendule, et d'un amplificateur électronique de cette force electromotrice.

On connaît différents sismomètres de fabrication française et étrangère. Le document DE-C-707 257 décrit un sismomètre comportant une lame mince flexible encastrée à l'une de ses extrémités ét portant à l'autre éxtrémité une bobine mobile dans l'entrefer d'un aimant permanent. Un sismomètre de conception voisine fait l'objet du document DE-B-1 053 796 et comprend en outre un amplificateur des signaux délivrés par la bobine mobile. Ces appareils peuvent être répartis schématiquement en deux catégories.

Les uns, très performants sur le plan de la sensibilité, possèdent une fréquence propre qui est voisine de 1 hertz. Ils sont généralement étalonnables et testables à distance. Cependant, leur conception mécanique ne leur permet pas de mesurer des accélérations importantes de l'ordre de 0,2 g à 0,5 Hertz. En effet, de telles accélérations se traduisent par des déplacements relatifs bobine-aimant trop importants pour ces appareils.

D'autres sismomètres, moins sensibles, possèdent une fréquence propre qui est en général égale ou supérieure à 1 Hertz. Ces sismomètres peuvent mesurer des déplacements importants. Ils ne possèdent généralement pas de bobine de calibration, ni de possibilités d'ajuster finement la fréquence propre. Ils ne sont en général pas équipés d'électronique interne.

Le sismomètre selon la présente invention réunit les avantages des deux types d'appareils précédemment décrits. Il possède une grande sensibilité tout en permettant de mesurer des accélérations importantes.

En raison de ces caractéristiques, ce sismomètre trouve une application particulièrement avantageuse dans la sécurité d'un réacteur nucléaire en cas de séisme. En effet pour une telle application, il est avantageux que le sismomètre soit capable de mesurer des accélérations comprises entre 0,01g et 0,2g dans une gamme de fréquences comprises entre 0,5 et 30 Hertz. Il est nécessaire de disposer d'une voie de mesure verticale et de deux voies de mesures horizontales. On réalise ainsi un ensemble de trois capteurs permettant de mesurer l'intensité du séisme suivant les trois axes.

Un ensemble de trois voies de mesure électronique est installé à environ 250 m des capteurs. Un câble de grande longueur transmet le signal délivré par les capteurs à l'ensemble de mesure électronique.

Plus précisément, le sismomètre selon l'invention est du genre de ceux qui comportent un aimant permanent solidaire d'une plaque support, une lame mince flexible encastrée à l'une de ses extrémités dans un support lui-même solidaire de la plaque support et portant à l'autre extrémité une bobine librement mobile dans l'entrefer de l'aimant permanent, des moyens d'amplification de la force électromotrice induite dans la bobine par un déplacement de celle-ci dans l'entrefer de l'aimant. Il se caractérise en ce que le profil de ladite lame mince flexible présente un renflement dans la partie qui se trouve au niveau du ventre situé au voisinage de l'extrémité libre de ladite lame et correspondant au premier mode de vibrations partielles de cette lame flexible, ladite lame flexible portant en outre à son à son extrémité libre, une masse additionelle équilibrant le poids de la bobine, de telle sorte que le centre de gravité de l'équipage mobile constitué par ladite bobine et ladite masse additionnelle se trouve dans l'axe du profil de la lame flexible.

Le profil de ladite lame mince flexible présente un renflement dans la partie qui se trouve au niveau du ventre correspondant au premier mode de vibration partielle parce que, dans le cas d'une lame vibrante, il existe d'autres modes de vibration que le mode fondamental. C'est pourquoi, afin de reporter le premier mode partiel à une fréquence plus élevée, la lame a été épaissie au niveau du ventre qui se trouve au voisinage de l'extrémité de la lame pour ce premier mode partiel.

La lame flexible porte en outre à son extrémité libre une masse additionelle équilibrant le poids de la bobine de telle sorte que le centre de gravité de l'équipage mobile ainsi constitué se trouve dans l'axe du profil de la lame flexible. Cette disposition permet de diminuer la sensibilité du sismomètre aux efforts transverses. Le document DE-A- 2 303 104 décrit un accéléromètre comportant une lame mince flexible portant à une extrémité libre une bobine mobile dans l'entrefer d'un aimant, permanent et une masse additionnelle. Toutefois, le profil de ladite lame ne présente aucun renflement et il est seulement précisé de façon, claire dans ce document que le rôle de la masse additionelle est d'amplifier l'amplitude des oscillations de cette lame.

Afin de permettre le réglage fin de la fréquence propre du sismomètre selon l'invention, le support de la lame flexible comporte des moyens pour régler la longueur de celle ci.

D'autres caractéristiques et avantages de l'invention apparaîtront mieux après la description qui suit d'exemples de réalisation donnés à titre explicatif et nullement limitatif, en référence aux dessins annexés, sur lesquels:

— la figure 1 représente schématiquement un sismomètre vertical selon l'invention,

— la figure 2 représente schématiquement un sismomètre horizontal selon l'invention,

— la figure 3 représente une vue de détail du sismomètre représenté sur la figure 1,

— la figure 4 représente une vue de détail montrant en particulier le dispositif de blocage de l'équipage mobile,

– la figure 5 représente une vue en coupe selon
la ligne A-A de la figure 4.

– la figure 6 représente une vue de dessus d'un
sismomètre vertical selon l'invention, et

– la figure 7 représente schématiquement les
moyens d'amplification situés à la sortie du sismomètre.

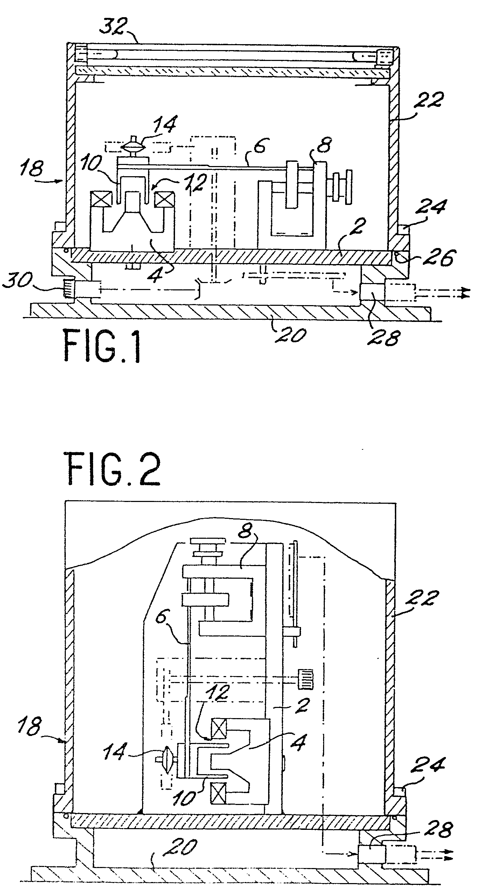

On a représenté sur les figures 1 et 2, deux variantes de réalisation d'un sismomètre selon l'invention. La figure 1 représente un sismomètre
destiné à mesurer la composante verticale d'un
ébranlement du sol, tandis que le sismomètre représenté sur la figure 2 est destiné à mesurer une
composante horizontale de cet ébranlement. En
effet, comme on le sait, les capteurs modernes
possèdent un seul degré de liberté et enregistrent
la composante du mouvement du sol suivant une
seule direction. Pour obtenir un enregistrement
complet, il faut donc disposer d'un capteur pour
la composante verticale, et de deux capteurs pour
deux composantes horizontales perpendiculaires
par exemple, nord-sud et est-ouest.

Sur ces figures, on a désigné par la référence 2
la plaque support, par la référence 4 l'aimant permanent et par la référence 6 la lame flexible. Cette
lame flexible est encastrée à l'une de ses extrémité
dans un support 8 lui-même solidaire de la plaque
support 2. La lame flexible 6 porte à son autre extrémité une bobine 10 mobile librement dans l'entrefer 12 de l'aimant 4. Une masse additionelle 14
équilibre le poids de la bobine 10 de manière à ce
que le centre de gravité de l'équipage mobile constitué par la bobine et la masse additionnelle se
trouve dans l'axe du profil de la lame flexible 6.

Le principe de fonctionnement est le même
pour les deux appareils. En particulier, l'équipage
mobile est identique. Seuls quelques détails de
réalisation distinguent ces deux appareils. On remarque que la plaque support 2 du sismomètre
vertical est horizontale, tandis que celle du sismomètre horizontal est verticale. Une autre différence concerne le dispositif de blocage de l'équipage mobile, dispositif utilisé pendant les transports. Pour le sismomètre vertical, le dispositif de
blocage peut être actionné de l'extérieur de l'appareil. Par contre, dans le cas du sismomètre horizontal, il est nécessaire d'ouvrir l'appareil pour y
accéder.

L'ensemble constitué par la plaque support 2,
par l'aimant 4, par l'équipage mobile et par le support 8 est logé à l'intérieur d'un boîtier en alliage
léger 18 obtenu par fonderie. Le boîtier 18 est entièrement étanche et permet un fonctionnement
du sismomètre en extérieur par tous temps. Le
boîtier 18 se compose d'une platine 20 et d'une
cloche 22 fixée sur la platine par huit boulons 24.
La jonction entre la platine 20 et la cloche 22 est
rendue étanche par un joint torique 26. Sur la platine 20, on trouve encore le connecteur de sortie
étanche 28, le dispositif de commande 30 du
système de blocage de l'équipage mobile, et enfin
un bouchon de décompression (non représenté).

La cloche 22 est munie d'une poignée 32 pour
le transport de l'appareil.

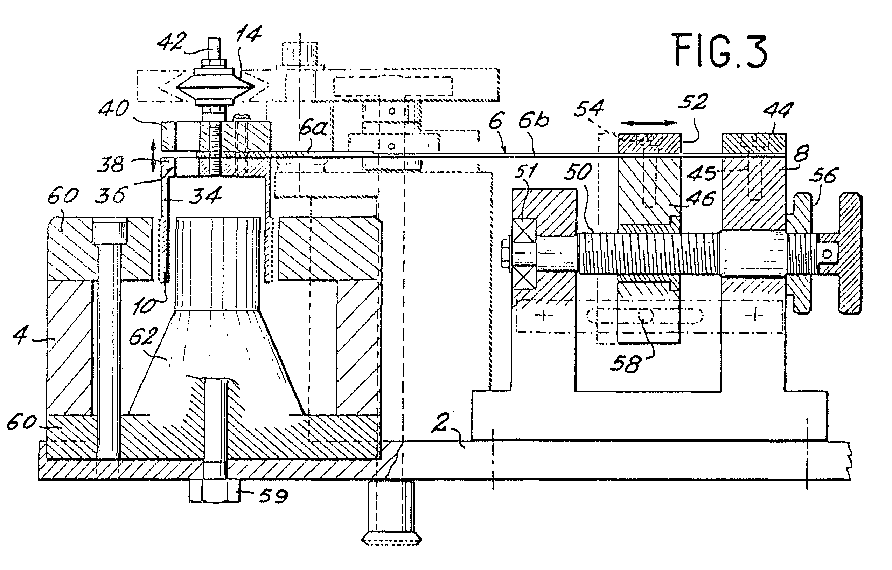

La figure 3 représente une vue de détail du sismomètre vertical représenté sur la figure 1. On reconnaît la plaque support 2, l'aimant 4, la lame
flexible 6 encastrée dans le support 8 à l'une de
ses extrémités et portant à l'autre extrémité une
bobine 10 équilibrée par une masse additionnelle
14. La lame vibrante 6 est réalisée en Chrysocal
®. Elle a une longueur de 10 cm, une largeur de 1
cm. Son extrémité 6a possède une épaisseur de 1
mm, tandis que celle de l'extrémité 6b n'est que de
0,5 mm. En effet, cette lame a été étudiée pour vibrer selon son mode fondamental à 5 Hertz, lorsqu'elle est chargée en bout par la bobine de mesure 10 et par la masse additionnelle 14. On sait
en effet que dans le cas de lames vibrantes, il
existe d'autres modes de vibration que le mode
fondamental, les modes partiels qui résonnent à
des fréquences supérieures à celles du mode fondamental. Si la lame vibrante 6 possédait une
épaisseur constante, ce premier mode partiel serait d'environ 31 Hertz. Afin de reporter celui-ci à
une fréquence plus élevée, la lame 6 a été épaissie
au niveau du ventre qui se trouve au voisinage de
l'extrémité de la lame pour ce mode. Cette épaisseur a été portée à 1 mm, ce qui permet, avec un
mode fondamental de fréquence 5 Hertz, de reporter la fréquence du premier mode partiel à une
valeur supérieure à 70 Hertz.

D'autre part, le coefficient de surtension obtenu
sur ce premier mode partiel a été très fortement diminué en assurant un amortissement électrodynamique à vide par circulation de courant de Foucault dans le mandrin 34 de la bobine 10 réalisé
en aluminium. Trois lumières partiquées dans le
mandrin 34 permettent, en ajustant la résistance
ohmique de ce dernier, de régler à une valeur 0,5
le coefficient d'amortissement à vide du pendule
équivalent.

La bobine 10 comporte 2000 tours en fil de
cuivre de 56 centièmes de millimètre de diamètre.
Ce fil est bobiné sur le mandrin en aluminium 34
qui est lui-même fixé à un support en Plexiglass
®36. La bobine 10 est rendue solidaire de la
lame vibrante 6 par l'intermédiaire de deux rondelles 38 et 40 fixées par la tige filetée 42. La bobine 10 comporte encore un enroulement secondaire de deux cents tours permettant d'étalonner
le capteur. La masse additionnelle 14 qui est également fixée à la bobine 10 et aux rondelles 38 et
40 à l'aide de la tige filetée 42 permet d'obtenir
une fréquence propre de 5 Hertz avec la lame précédemment définie. Elle permet également de situer le centre de gravité de l'ensemble mobile
dans le plan de la lame 6, donc de diminuer la sensibilité aux efforts transversaux. Enfin, la masse
additionelle 14 peut être bloquée par des pinces
qui permettent l'immobilisation de l'équipage
mobile pendant le transport du sismomètre.

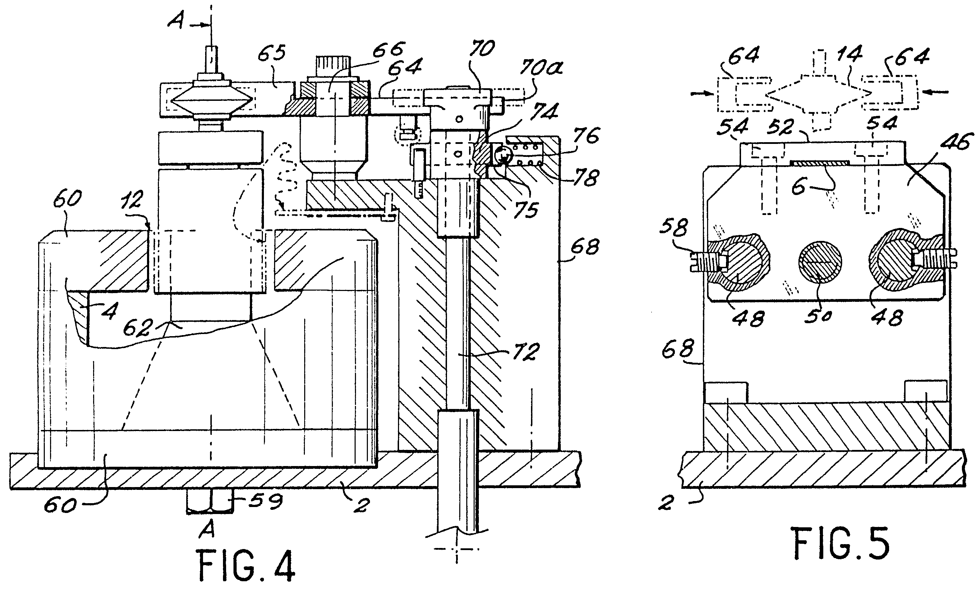

La fréquence propre du sismomètre selon l'invention peut être réglée avec précision. On fait varier cette fréquence propre en réglant la longueur
de la lame flexible 6. A cet effet voir également la
figure 5, la lame flexible 6 est serrée à son extrémité sur le support 8 par une plaquette 44 fixée par des vis 45. La pièce 46, mobile en translation, coulisse sur deux broches 48 parallèles à l'axe de la lame flexible 6. Une vis micrométrique 50 montée à l'une de ses extrémités sur un roulement à billes 51 permet de régler avec précision la position de la pièce mobile 46. Une plaquette 52 serrée par des vis 54 réalise un encastrement de la lame flexible 6 sur la pièce 46. Un contre-écrou 56 permet de bloquer la vis 50 en rotation. Deux vis 58 bloquent la pièce 46 sur chacun des broches 48.

L'aimant 4 est fixé sur la plaque support 2 par une vis 59; il est par conséquent solidaire du sol. C'est un aimant cylindrique en Ticonal ®, possédant deux armatures 60 et un noyau 62 qui définit un champ magnétique radial et uniforme dans un entrefer cylindrique 12 de 4 mm de largeur.

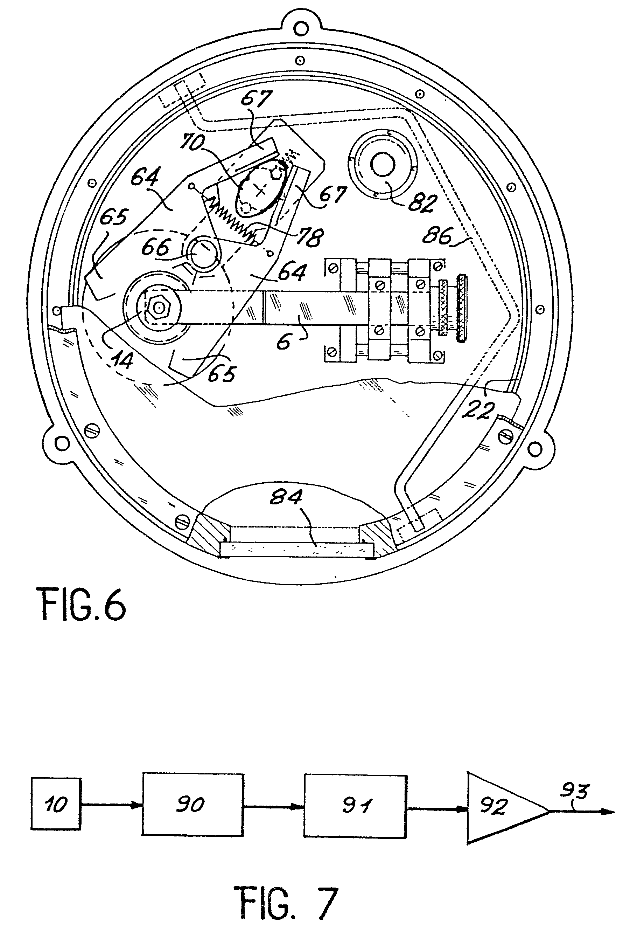

Le sismomètre selon l'invention comporte un dispositif de blocage de l'équipage mobile. Ce dispositif de blocage est plus particulièrement visible sur les figures 4 et 6. Il est constitué de deux mâchoires 64 pivotant autour d'un axe d'articulation 66 fixé sur un support d'articulation 68, luimême solidaire de la plaque support 2. Un écarteur 70 est solidaire d'un premier axe 72. Cet axe 72 peut être entraîné de l'extérieur de l'appareil par l'intermédaire d'un deuxième axe perpendiculaire au premier, ce deuxième axe étant actionné au moyen d'un levier extérieur, le mouvement étant transmis du premier axe au deuxième axe par l'intermédiaire d'un couple conique (non représenté). L'écarteur 70 est représenté en position de déblocage du dispositif. En traits pointillés, on a représenté la position de ce même écarteur désigné par la référence 70a, en position de blocage. Sous l'écarteur se trouve une came 74 qui définit la position de l'écarteur. Cette came comporte une encouche 75 à l'intérieur de laquelle s'engage une bille 76 contrainte par un ressort 78.

La figure 5 représente une vue en coupe selon la ligne A-A de la figure 4. Cette figure montre en particulier le dispositif de réglage de la fréquence propre de la lame flexible. La pièce 46 mobile en translation, représentée ici de face, coulisse sur les deux broches 48. La vis micrométrique 50 représentée en coupe permet de régler avec précision la position de la pièce mobile 46. On remarque également les deux vis 58 qui bloquent la pièce 46 sur chacun des arbres 48. La plaquette 52 serrée par des vis 54 permet de réaliser un encastrement de la lame flexible 6 sur la pièce 46.

On a également représenté sur cette figure 5, en traits pointillés, la masse additionnelle 14 et les deux mâchoires 64 qui permettent de l'immobiliser pendant le transport de l'appareil.

La figure 6 représente une vue de dessus d'un sismomètre vertical selon l'invention. Cette figure montre la pièce 64 articulée en son milieu autour d'un axe 66. On remarque la forme des mâchoires 65 aptes à serrer energiquement la masse additionnelle 14. Le ressort 78 tend à rapprocher les deuxièmes extrémités 67 des pièces 64. L'écarteur 70 est représenté en position de déblocage des mâchoires 65. Lorsqu'on fait pivoter, au moyen d'une commande extérieure l'écarteur 70 de 90°, ce dernier agissant à l'encontre de la force du ressort 78 écarte l'une de l'autre lesdites deuxièmes extrémités 67 des pièces 54, ce qui a pour effet de rapprocher les mâchoires 65, et par conséquent de bloquer l'équipage mobile porté par la lame flexible 6.

La cloche 22, représentée en coupe, comporte deux hublots. Le premier, situé sur la partie supérieure horizontale, permet de voir l'ensemble de l'équipage mobile ainsi que le dispositif à bulles 82 d'indication de niveau, qui permet de vérifier la position horizontale du sismomètre. Ce premier hublot n'est pas représenté sur la figure 6. La cloche 22 comporte un deuxième hublot, désigné sur la figure 6 par la référence 84. Le hublot 84, situé sur la partie latérale de la cloche permet de vérifier de façon précise le bon positionnement de la bobine de mesure 10 dans l'entrefer 12 de l'aimant 4. Les deux hublots sont plaqués à la cloche 22 par l'intermédiaire de deux anneaux vissés qui compriment un joint torique. La cloche 22 possède également sur sa partie supérieure une poignée de transport escamotable 86.

En référence à la figure 7, on a représenté schématiquement les moyens d'amplification situés à la sortie du sismomètre conforme à l'invention. Ces moyens d'amplification comprennent un adaptateur d'impédance 90 relié à la bobine mobile 10 représentée schématiquement sur la figure. Un circuit correcteur 91 est connecté en sortie de l'adaptateur 90, pour corriger l'amplitude et la phase de la fonction de transfert de l'ensemble formé par l'adaptateur d'impédance 90 et le pendule. Ce circuit correcteur permet d'abaisser la fréquence propre du pendule équivalent, de manière à faciliter les mesures des signaux basse fréquence, au moyen d'appareils de mesure classiques. Enfin, les moyens d'amplification comprennent un préamplificateur 92 dont la sortie 93 fournit des signaux représentatifs de la force électro-motrice induite dans la bobine; cette force électro-motrice est proportionnelle à la vitesse de déplacement de la bobine.

Le capteur selon l'invention peut être utilisé, en raison de ses caractéristiques particulièrement avantageuses, à la sécurité d'un réacteur nucléaire. Dans ce cas, le signal de haut niveau qu'il délivre est transmis, par l'intermédiaire d'un câble de grande longueur, à une électronique centralisée de traitement du signal.

**Revendications**

1. Sismomètre du genre de ceux qui comportent un aimant permanent (4) solidaire d'une plaque support (2), une lame mince flexible (6) encastrée à l'une de ses extrémitées (6b) dans un support (8) lui même solidaire de la plaque support (2) et portant à l'autre extrémité une bobine (10) librement mobile dans l'entrefer de l'aimant permanent (4), des moyens (92) d'amplification de la force électromotrice induite dans la bobine (10) par un déplacement de celle-ci dans l'entrefer de l'aimant (4), caractérisé en ce que le profil de ladite lame mince flexible (6) présente un renflement dans la partie qui se trouve au niveau du ventre situé au voisinage de l'extrémité libre (6a) ladite lame correspondant au premier mode de vibrations partielles de cette lame flexible, ladite lame flexible (6) portant en outre à son extrémité libre (6a), une masse additionnelle (14) équilibrant le poids de la bobine (10), de telle sorte que le centre de gravité de l'équipage mobile constitué par ladite bobine (10) et ladite masse additionelle (14) se trouve dans l'axe du profil de la lame flexible (6).

2. Sismomètre selon la revendication 1, caractérisé en ce que le support de la lame flexible (6) comporte des moyens pour régler la longueur de cette dernière.

3. Sismomètre selon la revendication 2, caractérisé en ce que lesdits moyens pour régler la longueur de ladite lame flexible (6) sont constitués par de premiers moyens (44, 45) solidaires du support (8), pour pincer la lame, et par de seconds moyens (46, 52) mobiles en translation pour pincer la lame (6) en un point variable de son profil, lesdits seconds moyens pouvant de plus être bloqués en ce point.

4. Sismomètre selon la revendication 3, caractérisé en ce que lesdits premiers moyens (44, 45) pour pincer la lame sont constitués par le support (8) lui-même et par une plaquette (44) serrant, au moyen de vis (45), la lame (6) sur le support (8), lesdits seconds moyens (46, 52) mobiles en translation étant constitués d'une part par une pièce mobile en translation (46); coulissant sur deux broches (48) parallèles à l'axe de la lame flexible (6) et mue dans les deux sens par un système de vis-écrou (50), un contre-écrou (56) assurant le blocage de ladite vis (50) en rotation, tandis que des vis (58) permettent de bloquer ladite pièce mobile (46) sur les broches (48), en un point quelconque; d'autre part, par une plaquette (52) serrée par des vis (54) sur la pièce mobile (46) et réalisant un encastrement de ladite lame flexible (6) sur ladite pièce mobile (46).

5. Sismomètre selon l'une quelconque des revendications 1 à 4, caractérisé en ce qu'il comporte en outre un dispositif de blocage de l'équipage mobile, ce dispositif étant constitué par deux pièces (64) articulées approximativement en leur milieu autour d'un axe (66), les premières extrémités desdites pièces (64) formant des mâchoires (65), aptes à serrer la masse additionnelle (14) solidaire de la lame flexible (6), les deuxièmes extrémités (67) étant sollicitées à se rapprocher sous l'action d'un ressort (78) situé entre lesdites deuxièmes extrémités (67), les mâchoires (65) s'écartant lorsque les deuxièmes extrémités s'écartent sous l'action d'un écarteur (70), lui aussi situé entre lesdites deuxièmes extrémités (67).

6. Sismomètre selon la revendication 5, caractérisé en ce que ledit écarteur (70) est solidaire d'un premier axe (72) qui peut être actionné de l'extérieur par un levier entraînant en rotation un deuxième axe, qui lui-même entraîne en rotation ledit premier axe par un couple conique, la position de l'écarteur (70) étant définie par une came (74) contrainte par un ressort (78).

7. Sismomètre selon l'une quelconque des revendications 1 à 6, caractérisé en ce que l'ensemble constitué par la plaque support (2), l'aimant permanent (4), le support (8) de la lame flexible (6), l'équipage mobile et l'amplificateur électronique est logé à l'intérieur d'un boîtier étanche, ledit boîtier étant constitué par une platine (20) sur laquelle on trouve un connecteur de sortie étanche (28), un bouchon de décompression, et par une cloche (22), fixée par des boulons sur la platine, une liaison étanche entre la platine (20) et la cloche (22) étant assurée par un joint torique.

8. Sismomètre selon l'une quelconque des revendications 1 à 7, caractérisé en ce que la bobine (10) est enroulée sur un cylindre d'aluminium (34) dans lequel sont pratiquées des lumières permettant, en ajustant la résistance ohmique dudit cylindre (34), de régler le coefficient d'amortissement à vide du pendule équivalent.

9. Sismomètre selon l'une quelconque des revendications 1 à 8, caractérisé en ce que l'aimant permanent (4), réalisé en Ticonal ®, possède deux armatures (60) et un noyau (62) et en ce qu'il définit un champ magnétique radial et uniforme dans un entrefer (12) cylindrique de 4 mm de largeur.

10. Sismomètre selon l'une quelconque des revendications 1 à 9, caractérisé en ce que la bobine (10) possède un enroulement secondaire permettant d'étalonner le sismomètre.

11. Sismomètre selon la revendication 1, caractérisé en ce que les moyens d'amplification comprennent un adaptateur d'impédance (90) relié à la bobine mobile (10), un circuit correcteur (91), connecté en sortie de l'adaptateur (90) pour corriger l'amplitude et la phase de la fonction de transfert de l'ensemble formé par l'adaptateur d'impédance (90) et le pendule, de manière à abaisser la fréquence propre de ce pendule et un préamplificateur (92) dont une sortie fournit des signaux représentatifs de la force électro-motrice induite dans la bobine (10), cette force électromotrice étant proportionnelle à la vitesse de déplacement de la bobine (10).

**Patentansprüche**

1. Seismometer von der Art, welches umfasst einen fest mit einer Grundplatte (2) verbundenen Permanentmagneten (4), eine dünne, flexible Zunge (6), die mit einem ihrer Enden (6b) in eine Halterung (8) eingespannt ist, die selbst mit der Grundplatte (2) fest verbunden ist, und die am anderen Ende eine Spule (10) trägt, die frei in dem Luftspalt des Permanentmagneten (4) beweglich ist, Mittel (92) zum Verstärken der bei einer Bewegung der Spule (10) in dem Luftspalt des Magneten (4) induzierten, elektromotorischen Kraft, dadurch gekennzeichnet, dass das Profil der dünnen, flexiblen Zunge (6) eine Verdickung in dem Abschnitt aufweist, welcher sich auf der Höhe des Bauches, der dem freien Ende (6a) der Zunge benachbart ist und der ersten Teilschwingungsart dieser flexiblen Zunge entspricht, befindet, dass die flexible Zunge (6) ferner an ihrem Ende (6a) eine zusätzliche Masse (14) trägt, die das Gewicht der Spule (10) derart ausgleicht, dass sich der Schwerpunkt des beweglichen Organs, welches von der Spule (10) und der zusätzlichen Masse (14) gebildet ist, in der Achse des Profils der flexiblen Zunge (6) befindet.

2. Seismometer nach Anspruch 1, dadurch gekennzeichnet, dass der Halter der flexiblen Zunge (6) Mittel zum Einstellen ihrer Länge umfasst.

3. Seismometer nach Anspruch 2, dadurch gekennzeichnet, dass die Mittel zum Einstellen der Länge der flexiblen Zunge (6) aus ersten, fest mit dem Halter (8) verbundenen Mitteln (44, 45) zum Einklemmen der Zunge und aus zweiten Mitteln (46, 52) bestehen, die verschiebbar beweglich sind, um die Zunge (6) an einer veränderbaren Stelle ihres Profils einzuklemmen, und dass die zweiten Mittel ferner an dieser Stelle arretierbar sind.

4. Seismometer nach Anspruch 3, dadurch gekennzeichnet, dass die ersten Mittel (44, 45) zum Einklemmen der Zunge von dem Halter (8) selbst und einer kleinen Platte (44) gebildet sind, die mittels einer Schraube (45) die Zunge (6) an den Halter (8) drückt, und dass die zweiten, verschieblich bewegbaren Mittel (46, 52) einerseits von einem verschieblich bewegbaren Teil (46), welches auf zwei zu der Achse der flexiblen Zunge (6) parallelen Stangen (48) gleitbar und in beiden Richtungen durch eine Schraube-Mutter-Einrichtung (50) bewegbar ist, wobei durch eine Feststellschraube (56) die Schraube (50) gegen eine Drehung arretierbar ist, während durch Schrauben (58) das bewegbare Teil (46) an den Stangen (48) an irgendeiner Stelle arretierbar ist, und andererseits von einer kleinen Platte (52) gebildet sind, die mittels Schrauben (54) an dem bewegbaren Teil (46) festgezogen ist und das Einklemmen der flexiblen Zunge (6) an dem bewegbaren Teil (46) bewirkt.

5. Seismometer nach irgendeinem der Ansprüche 1 bis 4, dadurch gekennzeichnet, dass es ferner eine Verriegelungsvorrichtung für das bewegbare Organ umfasst, wobei diese Vorrichtung von zwei ungefähr in ihrer Mitte um eine Achse (66) verschwenkbare Teile (64) gebildet ist, dass die ersten Enden dieser Teile (64) Backen (65) bilden, mit denen die an der flexiblen Zunge (6) fest befestigte, zusätzliche Masse einspannbar ist, dass die zweiten Enden (67) belastet sind, sich unter der Wirkung einer zwischen diesen zweiten Enden (67) angeordneten Feder (78) einander zu nähern, und dass sich die Backen (65) öffnen, wenn die zweiten Enden unter der Wirkung eines Spreizelementes (70) voneinander fort bewegt werden, das sich ebenfalls zwischen den zweiten Enden (67) befindet.

6. Seismometer nach Anspruch 5, dadurch gekennzeichnet, dass das Spreizelement (70) fest mit einer ersten Achse (72) verbunden ist, die von ausserhalb mittels eines eine zweite Achse in Bewegung setzenden Hebels betätigbar ist, welche wiederum über eine konische Kupplung die erste Achse in Drehung versetzt, und dass die Stellung des Spreizelementes (70) durch einen von einer Feder (78) belasteten Nocken (74) festlegbar ist.

7. Seismometer nach irgendeinem der Ansprüche 1 bis 6, dadurch gekennzeichnet, dass die von der Grundplatte (2), dem Permanentmagneten (4), dem Halter (8) für die flexible Zunge (6), dem bewegbaren Organ und dem elektronischen Verstärker gebildete Baueinheit im Inneren eines dichten Gehäuses untergebracht ist, dass das Gehäuse aus einer Platte (20), an der sich ein dichter Ausgangsstecker (28) und ein Dekompressionsstöpsel befinden, und aus einer Glocke (22) besteht, die mit Bolzen an der Platte befestigt ist, und dass eine dichte Verbindung zwischen der Platte (20) und der Glocke (22) durch eine torusförmige Dichtung sichergestellt ist.

8. Seismometer nach irgendeinem der Ansprüche 1 bis 7, dadurch gekennzeichnet, dass die Spule (10) auf einen Aluminiumzylinder (34) aufgewickelt ist, in dem Langlöcher ausgebildet sind, die beim Einstellen des Ohm'schen Widerstandes des Zylinders (34) erlauben, den Dämpfungskoeffizienten eines äquivalenten Pendels im Vakuum einzustellen.

9. Seismometer nach irgendeinem der Ansprüche 1 bis 8, dadurch gekennzeichnet, dass der aus Ticonal ® hergestellte Permanentmagnet (4) zwei Joche (60) und einen Kern (62) aufweist, und dass jener ein radiales und gleichförmiges Magnetfeld in einem zylinderförmigen Luftspalt (12) von 4 mm Breite festlegt.

10. Seismometer nach irgendeinem der Ansprüche 1 bis 9, dadurch gekennzeichnet, dass die Spule (10) eine Sekundärwicklung aufweist, mit der das Seismometer eichbar ist.

11. Seismometer nach Anspruch 1, dadurch gekennzeichnet, dass die Mittel zur Verstärkung einen mit der bewegbaren Spule (10) verbundenen Impedanzanpasser (90), einen mit dem Ausgang des Anpassers (90) verbundenen Korrekturkreis (91), um die Amplitude und die Phase der Übertragungsfunktion der von dem Impedanzanpasser (90) und dem Pendel gebildeten Einheit derart zu korrigieren, dass die Eigenfrequenz dieses Pendels gesenkt wird, und einen Vorverstärker (92) umfassen, dessen Ausgang die die in der Spule induzierte elektromotorische Kraft darstellenden Signale liefert, wobei diese elektromotorische Kraft der Bewegungsgeschwindigkeit der Spule (10) proportional ist.

**Claims**

1. A seismometer of the type comprising a permanent magnet (4) fixed to a support plate (2), a thin flexible lamina (6) gripped at one end (6b) in a support (8), which is itself fixed to the support plate (2), and having at its other end a coil (10) which is freely movable in the gap between the poles of the permanent magnet (4), means (92) for amplifying the electromotive force induced in the coil (10) by displacement of the latter in the gap between the poles of the magnet (4), characterized in that the longitudinal section of the thin flexible lamina (6) has a thickened portion in the region of the antinode of the first harmonic nearest the free end (6a) of said flexible lamina, said flexible lamina also having an additional mass (14) at its free end (6a) balancing the mass of the coil (10), whereby the centre of gravity of the movable assembly comprising said coil (10) and said additional mass (14) lies on the longitudinal axis of the flexible lamina (6).

2. A seismometer according to Claim 1, characterized in that the support for the flexible lamina (6) comprises means for adjusting the length of the latter.

3. A seismometer according to Claim 2, characterized in that said means for adjusting the length of said flexible lamina (6) comprise first means (44, 45) fixed to the support (8), for clamping the lamina, and second means (46, 52) longitudinally-movable to clamp the lamina (6) at a variable point along its length, said second means additionally being fixable at said point.

4. A seismometer according to Claim 3, characterized in that said first means (44, 45) for clamping the lamina comprise the support (8) itself, and a plate (44) holding the lamina (6) on the support (8) by means of a screw (45), said second longitudinally-movable means (46, 52) comprising, on the one hand, a longitudinally-movable member (46) slidable on two pins (48) parallel to the axis of the flexible lamina (6) and movable in either direction by a system comprising a screw (50), a lock-nut (56) ensuring locking of said screw (50) against rotation, whereby the screw (58) permits locking of said movable member (46) at any desired point on the pins (48); and on the other hand by a plate (52) held by screw (54) against the movable member (46) and providing gripping of said flexible lamina (6) on said movable member (46).

5. A seismometer according to any one of Claims 1 to 4, characterized in that it additionally comprises means for locking the movable assembly, said means comprising two members (64) articulated at approximately their middle around an axis (66), the first ends of said members (64) forming jaws (65), adapted to hold the additional mass (14) solid with the flexible lamina (6), the second ends (67) being urged together by a spring (78) located between said second ends (67), the jaws (65) moving together when the second ends are held apart by a spacer (70), which is itself located between said second ends (67).

6. A seismometer according to Claim 5, characterized in that said spacer (70) is fixed around a first axis (72) which is actuatable from outside by a lever rotatable by a second axis, which drives said first axis by a bevel gear, the position of said spacer (70) being governed by a cam (74) held by a spring (78).

7. A seismometer according to any one of Claims 1 to 6, characterized in that the assembly comprising the support plate (2), the permanent magnet (4), the support (8) for the flexible lamina (6), the movable assembly and the electronic amplifier is lodged in the interior of a gas-tight box, said box comprising a base plate (20) on which is a gas-tight output connector (28) and a decompression valve, and a bell (22) fixed on the base plate by bolts, a gas-tight seal between the base plate (20) and the bell (22) being provided by on O-ring.

8. A seismometer according to any one of Claims 1 to 7, characterized in that the coil (10) is wound on an aluminium cylinder (34) pierced by bores enabling adjustment of the electrical resistance of said cylinder (34) to regulate the damping coefficient in vacuum of the equivalent pendulum.

9. A seismometer according to any one of Claims 1 to 8, characterized in that the permanent magnet (4), formed from Ticonal ®, has two armatures (60) and one core (62), and in that it defines a uniform radial magnetic field over a cylindrical gap (12) between the poles having a width of 4 mm.

10. A seismometer according to any one of Claims 1 to 9, characterized in that the coil (10) has a secondary winding enabling calibration of the seismometer.

11. A seismometer according to Claim 1, characterized in that the amplification means comprise an impedance-adaptor (90) connected to the movable coil (10), a correcting circuit (91), connected to the output of the adaptor (90) to correct the amplitude and phase of the transfer function of the assembly constituted by the impedance adaptor (90) and the pendulum, whereby to lower the intrinsic frequency of said pendulum, and a preamplifier (92) having an output representative of the electromotive force induced in the coil (10), said electromotive force being proportional to the rate of displacement of the coil (10).

FIG.1

FIG.2

2 / 4

FIG.3

FIG. 4

FIG. 5

0 040 113

FIG.6

FIG. 7